# EUROPEAN PATENT SPECIFICATION

(11) **EP 1 271 794 B1**
(45) Date of publication and mention of the grant of the patent: **14.08.2013**
(21) Application number: 02013088.6
(22) Date of filing: 13.06.2002
(51) Int. Cl.: H04B 1/40, H04B 1/00

(54) **Triple band receiving apparatus of a mobile communication terminal**
Dreibandempfänger eines Mobilfunkendgerätes
Récepteur à trois bandes pour un terminal de communication mobile

(30) Priority: 29.06.2001 KR 2001038062
(43) Date of publication of application: 02.01.2003
(73) Proprietor: LG Electronics, Inc., Seoul (KR)
(72) Inventor: Kim, Dae-Hyun, Seoul (KR)
(74) Representative: Ter Meer Steinmeister & Partner

(56) References cited:
- EP-A- 0 923 198
- EP-A- 1 022 861
- US-A- 4 700 191
- Matthaei, G. et al.: "Microwave filters, impedance-matching networks and coupling structures", 1 November 1985 (1985-11-01), ARTECH HOUSE, NORWOOD (MA) - USA ISBN: 0890060991 pages 1-3,

## Description

### BACKGROUND OF THE INVENTION

### 1. Field of the Invention

The present invention relates to a mobile communication terminal, and in particular to a triple band mobile communication terminal used in three bands by adding a circuit to a dual band mobile communication receiver.

### 2. Description of the Prior Art

Recently, according to miniaturization, multi-function, diversification trends and compatibility improvement with equipment related to the Internet, a mobile communication terminal has been popularized, and accordingly a mobile communication terminal market has been rapidly expanded. In addition, interests in a dual band mobile communication terminal usable as a two-way system of a GSM (global system for mobile communication) and a DCS (digital cellular system) in Europe, a triple band mobile communication terminal usable in a PCS (personal communication system) besides the GSM and the DCS and a mobile communication terminal usable all over the world have increased.

The GSM is a TDMA digital system commonly used in European countries, it supports non-synchronous and synchronous data communication, etc. linked with an ISDN, a packet switching network, the Internet, etc. as well as a voice communication. Herein, the GSM is operated in a 900 MHz frequency band.

And, the DCS (digital cellular system) having a frequency range of 1800 MHz for a European PCN (personal mobile communication network) is a system upbanding the GSM, a CDMA (code division multi access) type PCS (personal communication system) uses a signal having 1900 MHz band and provides various kinds of radio communication services such as voice, data and fax, etc.

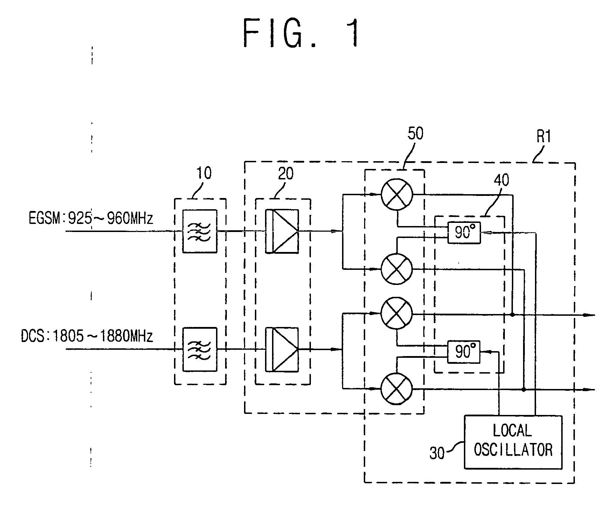

Figure 1 is a circuit diagram illustrating a dual band receiving apparatus of a mobile communication terminal in accordance with the conventional art.

As depicted in Figure 1, the dual band receiving apparatus lets the mobile communication terminal operate in two bands such as a 900 MHz EGSM (extended global system for mobile communication) and a 1800 MHz DCS (digital cellular system).

The dual band receiving apparatus includes a filter unit 10 receiving a signal inputted through an antenna and passing a pertinent frequency, an amplifier 20 amplifying the signal passing the filter unit 10, a phase shift unit 40 receiving an oscillation frequency outputted from a local oscillator 30 and phase-modulating it, and a mixing unit 50 mixing the oscillation frequency outputted through the phase shift unit 40 with the signal received through the amplifier 20 and outputting an intermediate frequency signal. Herein, the dual band receiving apparatus of the mobile communication terminal respectively includes a filter, a low noise amplifier, a mixer and a phase shift in order to receive signals in different bands. In addition, the amplifier 20, the mixing unit 50, the phase shift unit 40 and the local oscillator 30 construct a RF (radio frequency) receiver (R1) for dual band.

However, according to regional characteristics or user's necessity, the same mobile communication terminal has to be used as a PCS (personal communication system) or a DCS (digital cellular system) or a GSM (global system for mobile communication), in that case, because the mobile communication has to satisfy all three bands, a triple band receiving apparatus is required.

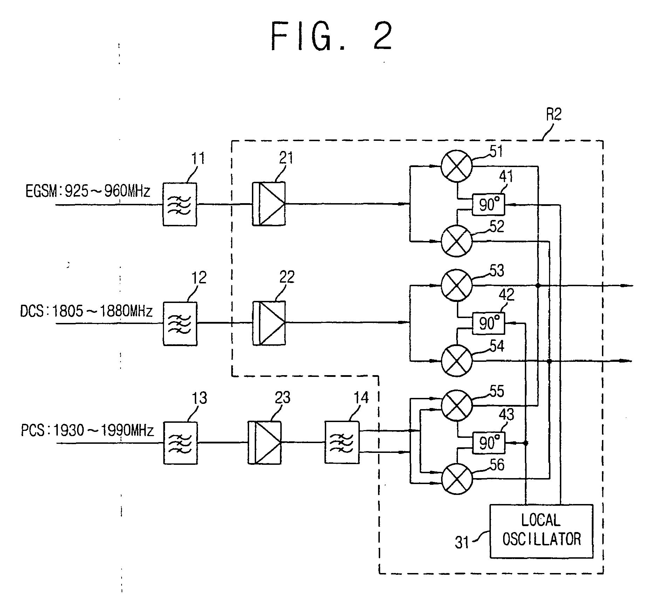

Figure 2 illustrates a triple band receiving apparatus of a mobile communication terminal in accordance with the conventional art.

As depicted in Figure 2, the triple band receiving apparatus lets the mobile communication terminal operate in multiple bands such as a 900 MHz EGSM (extended global system for mobile communication), a 1800 MHz DCS (digital cellular system) and a 1900 MHz PCS (personal communication system).

The triple band receiving apparatus of the mobile communication terminal includes a first - a third filters 11, 12, 13 passing only a reception frequency corresponded to each frequency band among signals inputted through an antenna, a third LNA (low noise amplifier) 23 amplifying a signal outputted from the third filter 13, a fourth filter 14 eliminating an image signal of the signal outputted from the third LNA 23 and a RF (radio frequency) receiver (R2) mixing the signal passing the first, the second and the fourth filters 11, 12, 14 with the oscillation frequency and outputting an intermediate frequency.

The RF receiver (R2) includes a first - a second LNA (low noise amplifier) 21, 22 amplifying signals passing the first and the second filters 11, 12, a first - a third phase shifts 41, 42, 43 receiving the oscillation frequency outputted from the local oscillator 31 and quadrature-modulates it, a first - a sixth mixers 51 - 56 mixing the oscillation frequency outputted from the first - the third phase shifts 41, 42, 43 with the signal outputted from the first and the second LNA 21, 22 and the fourth filter 14 and outputting an intermediate signal.

The first filter 11 passes a 900 MHz band signal, the second filter 12 passes a 1800 MHz band signal, and the third filter 13 passes a 1900 MHz band signal. And, the fourth filter 14 eliminates an image signal existed in the signal outputted from the third LNA 23, divides it into positive and negative and respectively inputs it to the fifth and the sixth mixers 55, 56 in order to eliminate more noise elements.

In order to use the conventional dual band mobile communication terminal in three bands, the RF receiver has to be replaced into a triple band RF receiver respectively including each terminal for each frequency band, and a low noise amplifier and a filter for a PCS have to be additionally implemented, therefore production process and production cost are increased.

In addition, in the conventional triple band receiving apparatus for the mobile communication terminal, in order to implement a RF receiver respectively including each terminal for each frequency band, because an internal circuit construction si complicated and its volume is increased, it runs counter to the recent mobile communication terminal's miniaturization and light-weight trends.

EP 0 923 198 A2 relates to a method for filtering radio frequency signals in so called multiband radio communication devices that operate in several frequency ranges and to a communication device operating in several frequency ranges. The desired frequency range is selected so that of the amplifiers placed between the filters on the receive side or correspondingly between the filters on the transmit side the amplifiers that control the desired signal paths are activated.

US 4,700,191 discloses a radar warning receiver including a central receiver unit and four identical radio frequency heads. Each of the RF heads is connected to a different antenna, amplifies a signal received by the respective antenna, performs a frequency conversation of a selected band to a first intermediate frequency base band of 2500 to 5000 MHz and transmits the converted IF signal to the central receiver unit.

### SUMMARY OF THE INVENTION

Accordingly, it is an object of the present invention to provide a triple band receiving apparatus of a mobile communication terminal which is capable of being used in three bands by adding a switching unit for band selection and an impedance matching unit to a RF receiver of the conventional dual band mobile communication terminal.

In addition, it is another object of the present invention to provide a triple band receiving apparatus of a mobile communication terminal which is capable of simplifying a circuit of a RF receiver of a dual band mobile communication terminal.

In order to achieve the above-mentioned objects, a triple band receiving apparatus of a mobile communication terminal includes a filter unit for passing only a reception frequency corresponded to each frequency band among signals received through an antenna; an impedance matching unit for matching an impedance of an output signal passing the filter unit; and a switching unit for selectively connecting a signal outputted from the impedance matching unit to RF (radio frequency) receiver.

A triple band receiving apparatus of a mobile communication terminal in accordance with the present invention includes a first ~ a third filters for passing only signals corresponded to a first ~ a third bands; an impedance matching unit for impedance-matching signals passing the second and the third filters; and a RF (radio frequency) receiver for processing signals inputted from the first filter and the switching unit as an intermediate frequency.

And, a triple band receiving apparatus of a mobile communication terminal in accordance with the present invention includes a first ~ a third filters for filtering signals in a first ~ a third bands; a first and a second matching units for impedance-matching the signals passing the second and the third filters; a switching unit for selectively connecting to the first or the second matching unit; a first and a second low noise amplifiers for amplifying signals inputted form the first filter and the switching unit at a certain level; a first and a second phase shifts for phase-modulating an oscillation frequency outputted from the local amplifier; a first and a second mixers for mixing an output signal of the first low noise amplifier with the oscillation frequency outputted from the first phase shift; and a third and a fourth mixers for mixing an output signal of the second low noise amplifier with the oscillation frequency outputted from the second phase shift.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram illustrating a dual band receiving apparatus of a mobile communication terminal in accordance with the conventional art;
Figure 2 is a block diagram illustrating a triple band receiving apparatus of a mobile communication terminal in accordance with the conventional art; and
Figure 3 is a block diagram illustrating a triple band receiving apparatus of a mobile communication terminal in accordance with the present invention.

### DETAILED DESCRIPTION OF THE PREFERRED EMBODIMENT

Hereinafter, embodiments of a triple band receiving apparatus of a mobile communication terminal in accordance with the present invention will be described with reference to accompanying drawings.

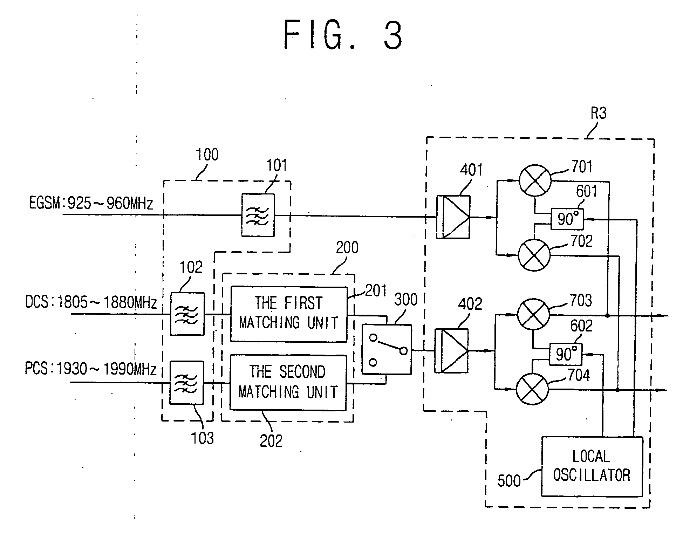

Figure 3 is a circuit diagram illustrating a triple band receiving apparatus of a mobile communication terminal in accordance with the present invention.

As depicted in Figure 3, a triple band receiving apparatus lets a mobile communication terminal operate in multi bands such as a 900 MHz EGSM (extended global system for mobile communication), a 1800 MHz DCS (digital cellular system) and a 1900 MHz PCS (personal communication system) through an antenna.

The triple band receiving apparatus of the mobile communication terminal includes a filter unit 100 passing respective reception frequencies corresponded to each frequency band among signals received through an antenna (not shown), an impedance matching unit 200 matching an impedance of a signal outputted through the filter unit 100, a switching unit 300 selectively outputting a signal passing the impedance matching unit 200, and a RF (radio frequency) receiver R3 mixing the signal from the switching unit 300 with the signal from the filter unit 100 and outputting an intermediate frequency.

The filter unit 100 includes a first filter 101 passing a 925 - 960 MHz EGSM signal, a second filter 102 passing a 1805 - 1880 MHz DCS signal and a third filter 103 passing a 1930 ~ 1990 MHz PCS signal.

The impedance matching unit 200 includes a first matching unit 201 placed between an output end of the second filter 102 and the switching unit 300 and a second matching unit 202 placed between an output end of the third filter 103 and the switching unit 300. Herein, the first matching unit 201 and the second matching unit 202 match an impedance mismatching of an input end of the RF receiver (R3), occurred according to an additional installation of the switching unit 300, as 50 ohm.

The switching unit 300 selects one of the signals outputted through the first matching unit 201 or the second matching unit 202 according to a band selection signal outputted from a control unit (not shown) and inputs it to the RF receiver (R3).

The RF receiver (R3) includes a first and a second low noise amplifiers 401, 402 amplifying signals inputted through the first filter 101 and the switching unit 300, a first and a second phase shifts 601, 602 receiving an oscillation frequency outputted from the local oscillator 500 and quadrature-modulating it, and a first - a fourth mixing units 701 ~ 704 mixing the oscillation frequency outputted through the first and the second phase shifts 601, 602 with the signal outputted from the first and the second low noise amplifiers 401, 402 and outputting an intermediate frequency signal. In more detail, the RF receiver (R3) has the same structure as the dual band RF receiver (R2).

The local oscillator 500 outputs respective oscillation frequencies according to an EGSM signal, a DCS signal and a PCS signal received through the antenna (not shown).

The first and the second phase shifts 601, 602 are set as 90°, however, an oscillation frequency received from the local oscillator 500 is different according to a frequency of a signal inputted through the antenna (not shown), an oscillation frequency outputted from the first and the second phase shifts 601, 602 is different according to an reception signal inputted to the system.

And, the first and the second mixers 701, 702 mix the signal outputted from the first low noise amplifier 401 with the oscillation frequency outputted from the first phase shift 601, and the third and the fourth mixers 703, 704 mix the signal outputted from the second low noise amplifier 402 through the switching unit 300 with the oscillation frequency outputted from the second phase shift 602.

The operation of the triple band receiving apparatus of the mobile communication terminal will be described.

A certain band signal is inputted to the first - the third filters 101 - 103 through the antenna (not shown), the first - the third filters 101 - 103 filter respective reception frequencies. In more detail, among reception frequencies, a 925 ~ 960 MHz EGSM signal is filtered in the first filter 101, a 1805 - 1880 MHz DCS signal is filtered in the second filter 102, and a 1930 - 1990 MHz PCS signal is filtered in the third filter 103.

The signal passing the first filter 101 is amplified at a certain level by passing the first low noise amplifier 401 of the RF receiver (R3) and is inputted to the first and the second mixers 701, 702. In the meantime, the first phase shift 601 receiving the oscillation frequency outputted from the local oscillator 500 outputs a quadrature-modulated signal to the first and the second mixers 701, 702. The first and the second mixers 701, 702 mix the signal outputted from the first low noise amplifier 401 with the oscillation frequency outputted from the first phase shift 601 and outputs an intermediate frequency signal.

And, the signal passing the second and the third filters 102, 103 is respectively inputted to the first and the second matching units 201, 202. Herein, the first and the second matching units 201, 202 placed at the front end of the switching unit 300 adjust an impedance mismatching of the input end of the RF receiver (R3).

The DCS signal passing the second filter 102 is impedance-matched in the first matching unit 201, passes the switching unit 300 and is inputted to the second low noise amplifier of the RF receiver (R3), is amplified at a certain level and is inputted to the first and the second mixers 701, 702. And, the second phase shift 602 receiving the oscillation frequency outputted from the local oscillator 500 outputs respective modulated signals to the third and the fourth mixers 703, 704. The third and the fourth mixers 703, 704 mix the signal outputted form the second low noise amplifier 402 with the oscillation frequency outputted from the second phase shift 602 and outputs an intermediate frequency signal.

And, the PCS signal passing the third filter 103 is impedance-matched in the second matching unit 202, passes the switching unit 300, is inputted to the second low noise amplifier 402 of the RF receiver (R3), is amplified at a certain level and is inputted to the first and the second mixers 701, 702. And, the second phase shift 602 receiving the oscillation frequency outputted from the local oscillator 500 outputs the quadrature-modulated signal to the third and the fourth mixers 703, 704. The third and the fourth mixers 703, 704 mix the signal outputted form the second low noise amplifier 402 with the oscillation frequency outputted from the second phase shift 602 and outputs an intermediate frequency signal.

In more detail, in the triple band receiving apparatus of the mobile communication terminal in accordance with the present invention, the DCS signal and the PCS signal use the input end of the RF receiver in common. Accordingly, at the exterior of the RF receiver, respective filters passing the DCS signal and the PCS signal, respective matching units performing an impedance matching of the signal outputted from the respective filters and a band selection switching unit selectively inputting signals passing the matching units to the low noise amplifier of the RF receiver are installed.

As described above, in the triple band receiving apparatus of the mobile communication terminal in accordance with the present invention, by constructing a matching unit for signal impedance matching and a band selection switching unit at the exterior of a dual band RF receiver, a construction of an internal circuit can be simplified, and a production process and a production cost can be reduced.

In addition, in the triple band receiving apparatus of the mobile communication terminal in accordance with the present invention, by constructing the triple band receiving apparatus operated in three bands by using a dual band RF receiver, an internal circuit construction can be simplified and miniaturized, and accordingly a mobile communication terminal can be efficiently miniaturized and light-weighed.

As the present invention may be embodied in several forms without departing from the spirit or essential characteristics thereof, it should also be understood that the above-described embodiments are not limited by any of the details of the foregoing description, unless otherwise specified, but rather should be construed broadly within the scope as defined in the appended claims, and therefore all changes and modifications that fall within the metes and bounds of the claims

## Claims

1. A mobile communication terminal having a triple band receiving apparatus, comprising:
a filter unit (100) including a first, second and a third filter unit (101, 102, 103), each of the first, second and third filter unit (101, 102, 103) is adapted for filtering a signal, respectively received through an antenna, corresponding to three frequency bands;
**characterized in that** the triple band receiving apparatus further comprises:
a dual-band radio frequency (RF) receiver (R3);
an impedance matching unit (200) including a first matching unit (201) receiving a signal output by the second filter unit (102) and a second matching unit (202) receiving a signal output by the third filter unit (103), wherein impedance matching unit (200) is adapted to match an impedance of signals outputted from the second and third filter unit (102, 103); and
a switching unit (300) disposed externally to the dual-band RF receiver (R3) and is adapted to selectively connect a signal outputted by the impedance matching unit (200) to the RF receiver (R3),
wherein the switching unit (300) has a first input for receiving a first-band signal and a second input for receiving a second-band signal and switches between selection of the first-band signal and the second-band signal based on a band select signal,
wherein the dual-band RF receiver (R3) is adapted to receive a third-band signal from the first filter (101), and
wherein the first-band signal to the third-band signal are signals for providing different kinds of radio communication services.

2. The mobile communication terminal of claim 1, wherein the dual-band RF receiver (R3) further includes:
an amplifier (401, 402) for amplifying a reception signal at a certain level;
an oscillating unit (500) for phase-modulating an oscillation frequency and outputting it; and
a mixing unit (701~704) for outputting an intermediate frequency by mixing an output signal of the oscillating unit (500) with an output signal of the amplifier (401, 402).

3. The mobile communication terminal of claim 2, wherein the oscillating unit (500) includes:
a local oscillator (500) for generating/outputting an oscillation frequency; and
a phase shift unit (601, 602) for phase-modulating the received oscillation frequency.

4. The mobile communication terminal as claimed in of the preceding claims, wherein the impedance matching unit (200) is provided for impedance-matching signals passing the second (102) or the third filters (103); and
the RF (radio frequency) receiver (R3) for processing signals inputted from the first filter (102) or the switching unit (300) as an intermediate frequency.

5. The mobile communication terminal of claim 4, wherein the RF receiver (R3) includes:
a local oscillator (500) for generating/outputting an oscillation frequency;
a first and a second phase shifting units (601, 602) for receiving the oscillation frequency from the local oscillator (500) and phase-modulating it; and
a mixing unit (701~704) for outputting an intermediate frequency by respectively mixing the signals outputted from the first and the second phase shifting units (601, 602) with the signal outputted from the amplifier (401, 402).

6. The mobile communication terminal of claim 1, wherein the amplifier (401, 402) includes:
a first low noise amplifier (401) for amplifying a signal received through the first filter (101) at a certain level; and
a second low noise amplifier (402) for amplifying a signal received through the second or the third filter (102, 103) at a certain level.

7. The mobile communication terminal of claim 5, wherein the first and the second phase shifting unit (601, 602) are respectively connected between the local oscillator (500) and the mixer (701-704), and it quadrature-modulates the oscillation frequency.

8. The mobile communication terminal of claim 5, wherein the mixer (701-704) includes:
a first and a second mixers (701, 702) connecting the first low noise amplifier (401) with the first phase shifting unit (601); and
a third and a fourth mixers (703, 704) for connecting the second low noise amplifier (402) with the second phase shifting unit (602).

9. The mobile communication terminal according to one of the preceding claims, comprising:
a firstsecond and a third filters (101, 102, 103) for filtering signals in a first, second, a third band;
a first and a second matching units (201, 202) for impedance-matching the signals passing the second and the third filters (102, 103);
a switching unit (300) for selectively connecting to the first or the second matching unit (201, 202);
a first and a second low noise amplifiers (401, 402) for amplifying signals inputted from the first filter(101) and the switching unit (300) at a certain level;
a first and a second phase shifting units (601, 602) for phase-modulating an oscillation frequency outputted from the local oscillator (500);
a first and a second mixers (701, 702) for mixing an output signal of the first low noise amplifier (401) with the oscillation frequency outputted from the first phase shifter (601); and
a third and a fourth mixers (703, 704) for mixing an output signal of the second low noise amplifier (402) with the oscillation frequency outputted from the second phase shifting unit (602),
wherein the first and second matching units (201, 202) are disposed between the second and third filters (102, 103) and the switching unit (500) and adjust an impedance mismatch at the second low noise amplifier (402) caused by the switching unit (500).

10. The mobile communication terminal of claim 9, wherein the switching unit (300) connects the second or the third matching unit (201, 202) with the second low noise amplifier (402) according to a band selection signal.

11. The mobile communication terminal of claim 9, wherein the first and the second phase shifting units (601, 602) are respectively connected between the local oscillator (500) and the mixer (701-704), and it quadrature-modulates the oscillation frequency.

12. The mobile communication terminal as claimed in one of the preceding claims, wherein the second band (DCS) and the third band (PCS) have respective frequency bands adjacent each other in comparison with the first band (EGSM).

13. The mobile communication terminal as claimed in one of the preceding claims, wherein the local oscillator (500) outputs a different oscillation frequency according to a frequency band of a received signal.

## Patentansprüche

1. Mobilkommunikationsendgerät, das eine Triple-Band-Empfangsvorrichtung aufweist und das umfasst:
eine Filtereinheit (100), die eine erste, eine zweite und eine dritte Filtereinheit (101, 102, 103) enthält, wobei sowohl die erste als auch die zweite und die dritte Filtereinheit (101, 102, 103) entsprechend drei Frequenzbändern zum Filtern eines Signals ausgelegt ist, das jeweils durch eine Antenne empfangen wird;
**dadurch gekennzeichnet, dass** die Triple-Band-Empfangsvorrichtung ferner umfasst:
einen Dual-Band-Hochfrequenzempfänger (HF-Empfänger) (R3);
eine Impedanzanpassungseinheit (200), die eine erste Anpassungseinheit (201), die ein Signal empfängt, das von der zweiten Filtereinheit (102) ausgegeben wird, und eine zweite Anpassungseinheit (202), die ein Signal empfängt, das von der dritten Filtereinheit (203) ausgegeben wird, enthält, wobei die Impedanzanpassungseinheit (200) ausgelegt ist, eine Impedanz von Signalen, die von der zweiten und der dritten Filtereinheit (102, 103) ausgegeben werden, anzupassen; und
eine Schaltungseinheit (300), die außerhalb des Dualband-HF-Empfängers (R3) angeordnet ist und ausgelegt ist, selektiv ein Signal, das von der Impedanzanpassungseinheit (200) ausgegeben wird, mit dem HF-Empfänger (R3) zu verbinden,
wobei die Schaltungseinheit (300) einen ersten Eingang zum Empfangen eines Erstbandsignals und einen zweiten Eingang zum Empfangen eines Zweitbandsignals aufweist und zwischen der Auswahl des Erstbandsignals und des Zweitbandsignals basierend auf einem Bandauswahlsignal umschaltet,
wobei der Dualband-HF-Empfänger (R3) ausgelegt ist, ein Drittbandsignal von dem ersten Filter (101) zu empfangen, und
wobei das Erstbandsignal bis Drittbandsignal Signale zum Bereitstellen unterschiedlicher Arten von Funkkommunikationsdiensten sind.

2. Mobilkommunikationsendgerät nach Anspruch 1, wobei der Dualband-Empfänger (R3) ferner umfasst:
einen Verstärker (401, 402) zum Verstärken eines Empfangssignals auf einem bestimmten Pegel;
eine Oszillationseinheit (500) zum Phasenmodulieren und Ausgeben einer Oszillationsfrequenz; und
eine Mischeinheit (701-704) zum Ausgeben einer Zwischenfrequenz durch Mischen eines Ausgangssignals der Oszillationseinheit (500) mit einem Ausgangssignal des Verstärkers (401, 402);

3. Mobilkommunikationsendgerät nach Anspruch 2, wobei die Oszillationseinheit (500) enthält:
einen Hilfsoszillator (500) zum Erzeugen/Ausgeben einer Oszillationsfrequenz; und
eine Phasenverschiebungseinheit (601, 602) zum Phasenmodulieren der empfangenen Oszillationsfrequenz.

4. Mobilkommunikationsendgerät nach den vorhergehenden Ansprüchen, wobei die Impedanzanpassungseinheit (200) zum Anpassen der Impedanz von Signalen, die das zweite (102) oder das dritte Filter (102) passieren; und
der HF-Empfänger (Hochfrequenz-Empfänger) (R3) zum Verarbeiten von Signalen die von dem ersten Filter (102) oder der Schaltungseinheit (300) als eine Zwischenfrequenz eingegeben werden, vorgesehen sind.

5. Mobilkommunikationsendgerät nach Anspruch 4, wobei der Hochfrequenz-Empfänger (R3) umfasst:
einen Hilfsoszillator (500) zum Erzeugen/Ausgeben einer Oszillationsfrequenz;
eine erste und eine zweite Phasenverschiebungseinheit (601, 602) zum Empfangen und Phasenmodulieren der Oszillationsfrequenz von dem Hilfsoszillator (500); und
eine Mischeinheit (701-704) zum Ausgeben einer Zwischenfrequenz durch jeweiliges Mischen der Signalen, die von der ersten und der zweiten Phasenverschiebungseinheit (601, 602) ausgegeben werden, mit dem Signal, das von dem Verstärker (401, 402) ausgegeben wird.

6. Mobilkommunikationsendgerät nach Anspruch 1, wobei der Verstärker (401, 402) enthält:
einen ersten Verstärker (401) mit niedrigem Eigenrauschen zum Verstärken eines Signals, das durch das erste Filter (101) bei einem bestimmten Pegel empfangen wird; und
einen zweiten Verstärker (402) mit niedrigem Eigenrauschen zum Verstärken eines Signals, das durch das zweite oder das dritte Filter (102, 103) bei einem bestimmten Pegel empfangen wird.

7. Mobilkommunikationsendgerät nach Anspruch 5, wobei die erste und die zweite Phasenverschiebungseinheit (601, 602) jeweils zwischen den Hilfsoszillator (500) und den Mischer (701-704) geschaltet ist und jeweils die Oszillationsfrequenz quadratur-moduliert.

8. Mobilkommunikationsendgerät nach Anspruch 5, wobei der Mischer (701, 704) umfasst:
einen ersten und einen zweiten Mischer (701, 702), die den ersten Verstärker (401) mit geringem Eigenrauschen mit der ersten Phasenverschiebungseinheit (601) verbinden; und
einen dritten und einen vierten Mischer (703, 704) zum Verbinden des zweiten Verstärkers (402) mit geringem Eigenrauschen mit der zweiten Phasenverschiebungseinheit (602);

9. Mobilkommunikationsendgerät nach einem der vorhergehenden Ansprüche, das umfasst:
ein erstes, ein zweites und ein drittes Filter (101, 102, 103) zum Filtern von Signalen in einem ersten, einem zweiten und einem dritten Band;
eine erste und eine zweite Anpassungseinheit (201, 202) zum Impedanzanpassen der Signale, die das zweite und das dritte Filter (102, 103) passieren;
eine Schaltungseinheit (300) zum selektiven Verbinden mit der ersten oder der zweiten Anpassungseinheit (201, 202);
einen ersten und einen zweiten Verstärker (401, 402) mit geringem Eigenrauschen zum Verstärken von Signalen, die von dem ersten Filter (101) und der zweiten Schaltungseinheit (300) bei einem bestimmten Pegel eingegeben werden;
eine erste und eine zweite Phasenverschiebungseinheit (601, 602) zum Phasenmodulieren einer Oszillationsfrequenz, die von dem Hilfsoszillator (500) ausgegeben wird;
einen ersten und einen zweiten Mischer (701, 702) zum Mischen eines Ausgangssignals des ersten Verstärkers (401) mit geringem Eigenrauschen mit der Oszillationsfrequenz, die von dem ersten Phasenschieber (601) ausgegeben wird;
einen dritten und einen vierten Mischer (703, 704) zum Mischen eines Ausgangssignals des zweiten Verstärkers (402) mit geringem Eigenrauschen mit der Oszillationsfrequenz, die von der zweiten Phasenverschiebungseinheit (602) ausgegeben wird,
wobei die erste und zweite Anpassungseinheit (201, 202) zwischen dem zweiten und dem dritten Filter (102, 103) und der Schaltungseinheit (500) angeordnet sind und eine Impedanzfehlanpassung an dem zweiten Verstärker (402) mit geringem Eigenrauschen, die durch die Schaltungseinheit (500) verursacht wird, ausgleichen.

10. Mobilkommunikationsendgerät nach Anspruch 9, wobei die Schaltungseinheit (300) die zweite oder die dritte Anpassungseinheit (201, 202) mit dem zweiten Verstärker (402) mit geringem Eigenrauschen gemäß einem Bandauswahlsignal verbindet.

11. Mobilkommunikationsendgerät nach Anspruch 9, wobei die erste und die zweite Phasenverschiebungseinheit (601, 602) jeweils zwischen den Hilfsoszillator (500) und den Mischer (701-704) geschaltet ist und die Oszillationsfrequenz quadratur-moduliert.

12. Mobilkommunikationsendgerät nach einem der vorhergehenden Ansprüche, wobei das zweite Band (DCS) und das dritte Band (PCS) jeweilige Frequenzbänder aufweisen, die im Vergleich zu dem ersten Band (EFSNM) einander benachbart sind.

13. Mobilkommunikationsendgerät nach einem der vorhergehenden Ansprüche, wobei der Hilfsoszillator (500) eine unterschiedliche Oszillationsfrequenz gemäß einem Frequenzband eines empfangenen Signals ausgibt.

## Revendications

1. Terminal de communication mobile comportant un appareil de réception à trois bandes, comprenant :
une unité de filtre (100) comprenant des première, deuxième et troisième unités de filtre (101, 102, 103), chacune des première, deuxième et troisième unités de filtre (101, 102, 103) étant apte à filtrer un signal respectivement reçu par l'intermédiaire d'une antenne, correspondant à trois bandes de fréquences ;
**caractérisé en ce que** l'appareil de réception à trois bandes comprend en outre :
un récepteur de radiofréquences, RF, à deux bandes (R3) ;
une unité de correspondance d'impédance (200) comprenant une première unité de correspondance (201) recevant un signal délivré par la deuxième unité de filtre (102) et une deuxième unité de correspondance (202) recevant un signal délivré par la troisième unité de filtre (103), dans lequel l'unité de correspondance d'impédance (200) est apte à faire correspondre une impédance des signaux délivrés des deuxième et troisième unités de filtre (102, 103) ; et
une unité de commutation (300) disposée à l'extérieur du récepteur RF à deux bandes (R3) et apte à relier sélectivement un signal délivré par l'unité de correspondance d'impédance (200) au récepteur RF (R3),
dans lequel l'unité de commutation (300) a une première entrée pour recevoir un signal de première bande et une deuxième entrée pour recevoir un signal de deuxième bande et commute entre la sélection du signal de première bande et la sélection du signal de deuxième bande sur la base d'un signal de sélection de bande,
dans lequel le récepteur RF à deux bandes (R3) est apte à recevoir un signal de troisième bande provenant du premier filtre (101), et
dans lequel le signal de première bande, le signal de deuxième bande et le signal de troisième bande sont des signaux pour fournir différents types de services de radiocommunications.

2. Terminal de communication mobile selon la revendication 1, dans lequel le récepteur RF à deux bandes (R3) comprend en outre :
un amplificateur (401, 402) pour amplifier un signal de réception à un certain niveau ;
une unité d'oscillation (500) pour effectuer une modulation de phase sur une fréquence d'oscillation et pour la délivrer ; et
une unité de mélange (701 à 704) pour délivrer une fréquence intermédiaire en mélangeant un signal de sortie de l'unité d'oscillation (500) avec un signal de sortie de l'amplificateur (401, 402).

3. Terminal de communication mobile selon la revendication 2, dans lequel l'unité d'oscillation (500) comprend :
un oscillateur local (500) pour générer/délivrer une fréquence d'oscillation ; et
une unité de décalage de phase (601, 602) pour effectuer une modulation de phase sur la fréquence d'oscillation reçue.

4. Terminal de communication mobile selon l'une quelconque des revendications précédentes, dans lequel l'unité de correspondance d'impédance (200) est fournie pour des signaux de correspondance d'impédance passant par le deuxième filtre (102) ou le troisième filtre (103) ; et
le récepteur de radiofréquences, RF, (R3) est destiné à traiter des signaux entrés à partir du premier filtre (102) ou de l'unité de commutation (300) sous la forme d'une fréquence intermédiaire.

5. Terminal de communication mobile selon la revendication 4, dans lequel le récepteur RF (R3) comprend :
un oscillateur local (500) pour générer/délivrer une fréquence d'oscillation ;
des première et deuxième unités de décalage de phase (601, 602) pour recevoir la fréquence d'oscillation à partir de l'oscillateur local (500) et effectuer une modulation de phase sur celle-ci ; et
une unité de mélange (701 à 704) pour délivrer une fréquence intermédiaire en mélangeant respectivement les signaux délivrés à partir des première et deuxième unités de décalage de phase (601, 602) avec le signal délivré à partir de l'amplificateur (401, 402).

6. Terminal de communication mobile selon la revendication 1, dans lequel l'amplificateur (401, 402) comprend :
un premier amplificateur à faible bruit (401) pour amplifier un signal reçu à travers le premier filtre (101) à un certain niveau ; et
un deuxième amplificateur à faible bruit (402) pour amplifier un signal reçu à travers le deuxième ou troisième filtre (102, 103) à un certain niveau.

7. Terminal de communication mobile selon la revendication 5, dans lequel les première et deuxième unités de décalage de phase (601, 602) sont respectivement reliées entre l'oscillateur local (500) et le mélangeur (701 à 704), et elles effectuent une modulation en quadrature sur la fréquence d'oscillation.

8. Terminal de communication mobile selon la revendication 5, dans lequel le mélangeur (701 à 704) comprend :
des premier et deuxième mélangeurs (701, 702) reliant le premier amplificateur à faible bruit (401) à la première unité de décalage de phase (601) ; et
des troisième et quatrième mélangeurs (703, 703) reliant le deuxième amplificateur à faible bruit (402) à la deuxième unité de décalage de phase (602).

9. Terminal de communication mobile selon l'une quelconque des revendications précédentes, comprenant
des premier, deuxième et troisième filtres (101, 102, 103) pour filtrer des signaux dans des première, deuxième et troisième bandes ;
des première et deuxième unités de correspondance (201, 202) pour effectuer une correspondance d'impédance des signaux passant par les deuxième et troisième filtres (102, 103) ;
une unité de commutation (300) pour effectuer une liaison sélective avec la première ou deuxième unité de commutation (201, 202) ;
des premier et deuxième amplificateurs à faible bruit (401, 402) pour amplifier des signaux entrés à partir du premier filtre (101) et de l'unité de commutation (300) à un certain niveau ;
des première et deuxième unités de décalage de phase (601, 602) pour effectuer une modulation de phase sur une fréquence d'oscillation délivrée à partir de l'oscillateur local (500) ;
des premier et deuxième mélangeurs (701, 702) pour mélanger un signal de sortie du premier amplificateur à faible bruit (401) avec la fréquence d'oscillation délivrée à partir de la première unité de décalage de phase (601) ; et
des troisième et quatrième mélangeurs (703, 704) pour mélanger un signal de sortie du deuxième amplificateur à faible bruit (402) avec la fréquence d'oscillation délivrée à partir de la deuxième unité de décalage de phase (602),
dans lequel les première et deuxième unités de correspondance (201, 202) sont disposées entre les deuxième et troisième filtres (102, 103) et l'unité de commutation (500) et ajustent une non-correspondance d'impédance au deuxième amplificateur à faible bruit (402) provoquée par l'unité de commutation (500).

10. Terminal de communication mobile selon la revendication 9, dans lequel l'unité de commutation (300) relie la deuxième ou troisième unité de correspondance (201, 202) au deuxième amplificateur à faible bruit (402) en fonction d'un signal de sélection de bande.

11. Terminal de communication mobile selon la revendication 9, dans lequel les première et deuxième unités de décalage de phase (601, 602) sont respectivement reliées entre l'oscillateur local (500) et le mélangeur (701 à 704) et effectuent une modulation en quadrature sur la fréquence d'oscillation.

12. Terminal de communication mobile selon l'une quelconque des revendications précédentes, dans lequel la deuxième bande (DCS) et la troisième bande (PCS) ont des bandes de fréquences respectives adjacentes l'une à l'autre par comparaison avec la première bande (EGSM).

13. Terminal de communication mobile selon l'une quelconque des revendications précédentes, dans lequel l'oscillateur local (500) délivre une fréquence d'oscillation différente en fonction d'une bande de fréquences d'un signal reçu.
